# EUROPEAN PATENT APPLICATION

(11) **EP 1 533 653 A1**
(43) Date of publication of application: **25.05.2005**
(21) Application number: 05003579.9
(22) Date of filing: 13.09.2000
(51) Int. Cl.: G03B 35/08, G03B 15/00

(54) **A stereo camera apparatus**

(30) Priority: 22.09.1999 JP 26955299
(62) Divisional of application: 00119921.5
(71) Applicant: FUJI JUKOGYO KABUSHIKI KAISHA, Tokyo (JP)
(72) Inventor: Sogawa, Yoshiyuki, Subaru Laboratory, Mitaka-shi Tokyo (JP)
(74) Representative: Sajda, Wolf E., Dipl.-Phys.

(57) **Abstract**

The invention discloses a stereo camera apparatus comprising a main camera (4) and a sub-camera (5) which are adapted to take photographs from different points of view. The main camera (4) and the sub-camera (5) are disposed with a predetermined spacing in a direction substantially perpendicular to the axis direction of the vehicle. The optical axes of the main camera (4) and the sub-camera (5) are inclined by angles (θ1, θ2) toward the main camera (4) side with respect to the axis direction of the vehicle for making a three-dimensional distance distribution substantially left-right symmetric with respect to the axis direction.

## Description

### BACKGROUND OF THE INVENTION

### 1. Field of the Invention

The present invention relates to a stereo camera apparatus, in particular a stereo camera apparatus installed in a vehicle, which takes photographs of an object from different points of view for calculating a three-dimensional distance distribution of the object.

### 2. Description of the Related Art

Generally, image processing by a so-called stereo method is known as an image-based three-dimensional measuring technique. In such a stereo method, an object is photographed from different positions with a stereo camera which is composed of a pair of cameras, or a main camera and a sub-camera.

Then, a distance between the stereo camera apparatus and the object is determined from a parallax of the same object using camera parameters based on the principle of triangulation. Camera parameters are, for example, the mounting position, the focal length of the stereo camera apparatus and the like.

In particular, in such an image processing using the stereo method, a small region in a reference image photographed by the main camera is superimposed on an area within a search area set in a comparative image photographed by the sub-camera while successively shifting the small region pixel by pixel.

Thereafter, a position of an area within the search area corresponding to the small region of the reference image is obtained, the corresponding area having an image signal coincident with the image signal of the small region. Information on the distance to the object is then obtained from a positional difference (parallax) of the same object on the pair of images, or the reference image and the comparative image, using the principle of triangulation.

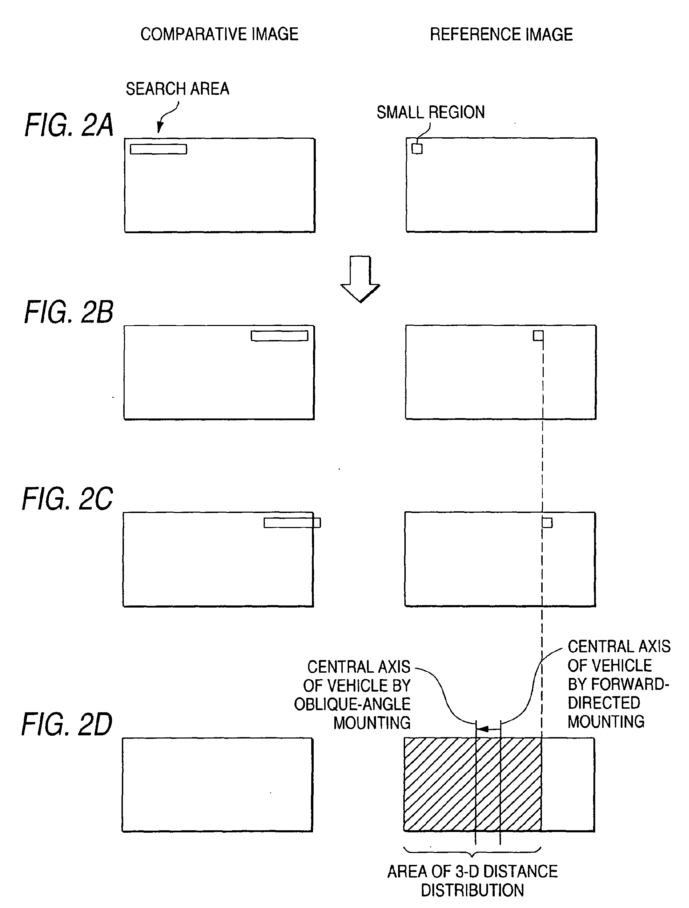

The stereo camera apparatus used in the aforementioned image processing is installed such that it is oriented to the front of a vehicle, or in an axis direction of the vehicle. A search area to be set in the comparative image is set in a strip-like area, as shown in Fig. 2A, which extends from a position substantially corresponding to a small region in the reference image toward the main camera.

Therefore, as is apparent from Fig. 2B and Fig. 2C, for a small region located in a specific zone of the outside (right side) of the vehicle in the reference image, it is impossible to allocate a corresponding search area in the comparative image and obtain distance information thereon.

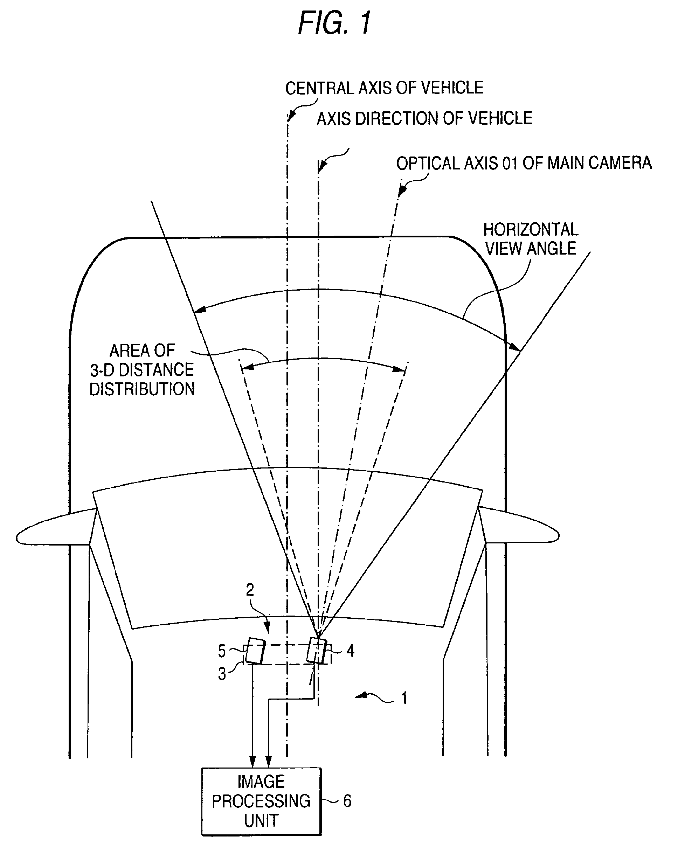

For this reason, an area in which a three-dimensional distance distribution is generated by the aforementioned image processing is inclined toward the sub-camera side (left side in Fig. 1) with respect to the central axis of the vehicle as shown in Fig. 2D. Consequently, it might be impossible to obtain a three-dimensional distance distribution having a sufficiently large area for an object to be photographed.

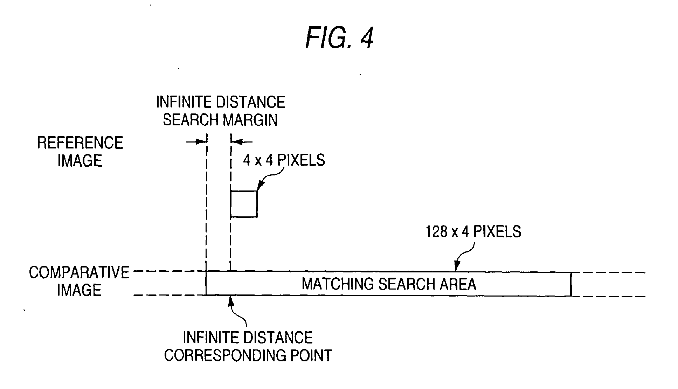

On the other hand, in order to enable detection of an infinite distance corresponding point, where the parallax is zero, when searching through the comparative image for a corresponding position of a small region in the reference image, it is necessary to set a search margin in a matching search area in the comparative image as shown in Fig. 4. When the reference image is produced using up to extreme ends of the camera frame, however, it becomes impossible to provide the search margin.

Document US-A-4 978 983 discloses a composite camera consisting of a conventional main camera for photochemical image reproduction and a second electronic camera, wherein the electronic camera is used for pre-selecting a picture without wasting any photochemical material. In order to solve the viewfinder problem, i.e. that imaged areas of both cameras do not match due to mutual displacement of the cameras, the image angle of the second camera is much larger than that of the conventional camera. With the help of calculating means, the larger image of the electronic camera is restricted to the smaller area of the image of the conventional camera.

Hence, a larger, unused imaged area of the electronic camera is necessary and has to be processed and reduced prior to any comparisons of images taken simultaneously.

From JP-A-09-097 342 a method for finding distances between a power transmission line and a tree in a mountaineous region is known where a pair of stereoscopic photographs is obtained from a patrol helicopter. To this end, three-dimensional coordinates of feature points are calculated from their parallax and compared with a model of the power transmission line as a straight line. In one embodiment, the two cameras of the stereoscopic system are inclined, obviously to observe a region not in front, but alongside the helicopter.

This prior art method requires that both cameras are inclined at the same angle, and no compensating means are provided if there is any mismatching between the pictures taken by the two cameras. Hence, there is no compensation of any infinite distance corresponding point shift.

GB-A-2 313 971 discloses a stereoscopic optical system for obstacle tracking in a moving vehicle where two cameras, which are spaced apart, are mounted on a turntable and can be inclined under the same angle. The turntable allows taking pictures not only in the front direction of the vehicle, but also to some extent to the sides thereof. The inclination angle can be dynamically changed, however, not for any individual camera, but only for both of them together. Therefore, it does not contribute anything to compensating any infinite distance corresponding point shift.

The publication WO94/10 504 discloses an automatic stereoscopic image acquisition and storage system where two identical still frame digital video cameras are supported in a spaced relationship on a support bar. The assembly can be rotated to arrive at an inclined position, or each camera can be rotated independently. In this manner, a series of mosaic pictures is taken that are stitched together to form composite left and right pictures. The conventional system is used for photogrammetric analysis and is neither intended nor suited to be installed in a car. In practice, stitching together of mosaic pictures would be far too slow to be useful in a vehicle where real time analysis is mandatory.

### Summary of the Invention

In the circumstances, the object underlying the present invention is to provide a stereo camera apparatus that is adapted to take pictures ready for use in a vehicle image processing.

According to the invention, this object is solved by a stereo camera apparatus installed in a vehicle, comprising: a main camera adapted to take photographs of an object in front of the vehicle; and a sub-camera adapted to take photographs of the object of a point of view different from a point of view of the main camera, the main camera and the sub-camera being disposed with a predetermined spacing in a direction substantially perpendicular to the axis direction of the vehicle; wherein the optical axes of the main camera and the sub-camera are inclined by angles towards the main camera side with respect to the axis direction of the vehicle for making a three-dimensional distance distribution substantially left-right-symmetric with respect to the axis direction.

In the apparatus according to the invention, the angle of inclination of the main camera and the angle of inclination of the sub-camera are corresponding to a displacement or distance between a first line on a reference image photographed by the main camera and a second line on the reference image. The first line is a line for setting a three-dimensional distance distribution generating an area on the reference image substantially symmetrical on left and right side with respect to the first line in the reference image. The second line is a vertical line perpendicular to the optical axis of the main camera in the reference image.

The invention will be described in more detail below with reference to a specific embodiment and in connection with the accompanying drawings.

### Brief Description of the Drawings

- Fig. 1: is a schematic construction diagram of a stereoscopic image processing system;
- Fig. 2A to Fig. 2D: are corresponding explanatory diagrams of a three-dimensional distance distribution;
- Fig. 3: is a top view of a stereo camera unit; and
- Fig. 4: is a diagram showing a search area in a comparative image necessary for detecting an infinite distance corresponding point.

### Detailed Description of the Preferred Embodiment

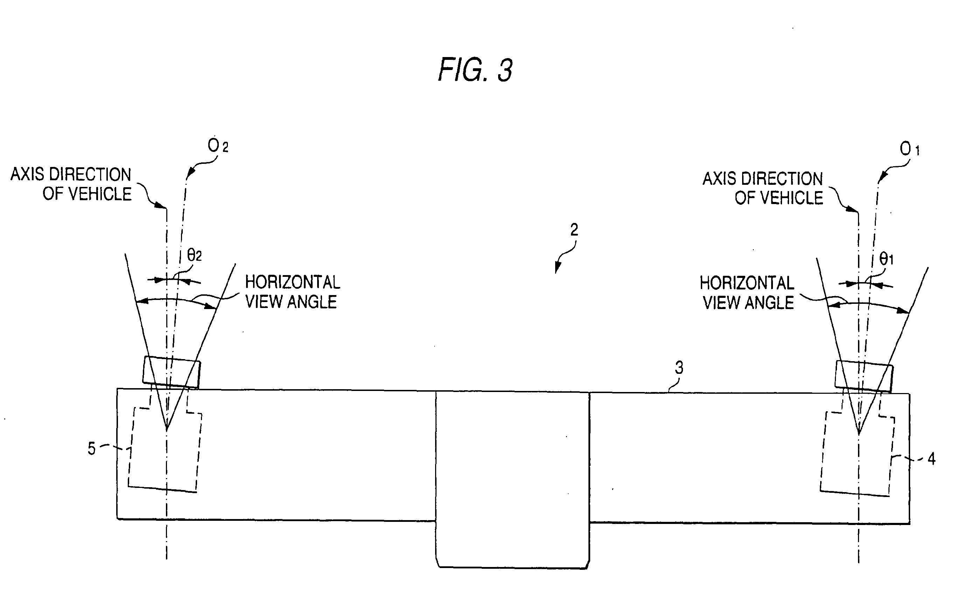

A specific embodiment of the invention is described below with reference to the drawings. Fig. 1 to Fig. 3 relate to an embodiment of the invention, wherein Fig. 1 is a schematic construction diagram of a stereoscopic image possessing system. Fig. 2A to Fig. 2D are explanatory diagrams of areas for generating a three-dimensional distance distribution, in Fig. 3 is a top view of a stereo camera unit.

In Fig. 1, reference sign 1 designates the stereoscopic image processing system in general which is installed on a vehicle, like a motor vehicle, and recognizes an object ahead of the vehicle. The stereoscopic image processing system 1 comprises a stereo camera unit 2 which takes stereoscopic photographs and an image processing unit 6 which produces a three-dimensional distance distribution of the object ahead of the vehicle by performing a stereoscopic image processing on a pair of images photographed by the stereo camera unit 2.

The stereo camera unit 2 is mainly constructed of a main camera 4, a sub-camera 5 and a camera stay 3. The main camera 4 and the sub-camera 5 are both provided as CCD cameras, for example, and assembled to the camera stay 3 with a specific distance between them. The camera stay 3 is mounted in the vicinity of a rear-view mirror of the vehicle.

The main camera 4 is attached to a right end of the camera stay 3 and captures a reference image (right image in Fig. 2A to Fig. 2D) which is needed by the aforementioned image processing unit 6 when it performs the stereoscopic image processing. The aforementioned sub-camera 5 is attached to a left end of the camera stay 3 and captures a comparative image (left image in Fig. 2A to Fig. 2D) for the aforementioned stereoscopic image processing.

The image processing unit 6 calculates the three-dimensional distance distribution of objects outside the vehicle by image processing the reference image and the comparative image photographed by the main camera 4 and the sub-camera 5; then, it calculates a relative distance and a relative speed between the vehicle, equipped with the camera unit 2 and a vehicle running ahead by detecting road shapes and three-dimensional positions of a plurality of three-dimensional objects at a high speed based on the three-dimensional distance distribution information

Calculation of the three-dimensional distance distribution by the image processing unit 6 is now described in more detail. At first, this image processing unit 6 sets a search area, for example 4 x 128 pixels, in the comparative image for a small region, for example 4 x 4 pixels, in the reference image as shown in Fig. 2A and Fig. 2B.

Thereafter, the image processing unit 6 superimposes the small region on an area within the search area while successively shifting the small region pixel by pixel, and determines a position of an area within the search are corresponding to the small region, the corresponding area having an image signal coincident with the image signal of the small region. Thus, the image processing unit 6 obtains information on the distance to an object from a positional difference (parallax) of the same object on the two images.

Thus, it is impossible to obtain a corresponding search area in the comparative image for small regions located in a specific zone at the right side (toward the main camera 4 side) of the reference image as shown in Fig. 2C.

Therefore, an area in which a three-dimensional distance distribution is generated by the image processing unit 6 is inclined toward the left side (toward the sub-camera 5 side) of the reference image as shown in Fig. 2D.

Taking into account the above problem, particular consideration is given to a structure for mounting the main camera 4 and the sub-camera 5 on the camera stay 3 in the stereo camera unit 2 of the present embodiment. In particular, the main camera 4 and the sub-camera 5 are assembled to the camera stay 3 in such a way that their optical axes O1 and O2 are inclined by angles θ1 and θ2 toward the main camera 4 side (rightward), respectively, as shown in Fig. 3 of the drawings.

In other words, the camera stay 3 is installed in the vehicle interior such that its longitudinal direction would become perpendicular to the central axis of the vehicle as shown in Fig. 1, and therefore the optical axes O1 and O2 of the main camera 4 and the sub-camera 5 are inclined rightward by the angles θ1 and θ2 with respect to the central axis.

This is for setting an area of a three-dimensional distance distribution, which is offset toward the sub-camera 5 side (leftward) within the horizontal view angle of the main camera 4, substantially symmetrically on left and right sides of the central axis of the vehicle, as shown in Fig. 1.

As a result, although the area of the three-dimensional distance distribution generating area is still offset toward the sub-camera 5 side (leftward) on the reference image, as shown in Fig. 2D, the area of the three-dimensional distance distribution produced by the image processing unit 6 is well balanced enabling left-right symmetry with respect to the vehicle equipped with the camera unit 2.

On the other hand, the angle of inclination θ1 of the main camera 4 and the angle of inclination θ2 of the sub-camera 5 are determined to satisfy the relationship θ1 > θ2. In other words, the optical axis O2 of the sub-camera 5 is set such that it is inclined toward the sub-camera 5 side (leftward) with respect to the optical axis O1 of the main camera 4.

This arrangement is made to provide a search margin in the comparative image to enable detection of an infinite distance corresponding point in stereo matching executed by the image processing unit 6 by setting a left end of the comparative image to the outside (leftward) of a left end of the reference image. It is to be noted, however, that such a setting exerts its effects when the reference image is produced using up to extreme ends of the camera frame.

The angles of inclination θ1 and θ2 of the main camera 4 and the sub-camera 5 are optimally set depending on their mounting interval, the focal length and the number of pixels of each camera, small regions and the search area, etc. in the stereoscopic image processing.

As described above, an area of a three-dimensional distance distribution is set with left-right symmetry with respect to the central axis of the vehicle, and a three-dimensional distance distribution having a necessary and sufficient area is obtained according to the present invention.

Also, it becomes possible to search for an infinite distance corresponding point by stereo matching by setting a search margin in a comparative image even when a reference image is produced using up to extreme ends of the camera frame.

## Claims

1. A stereo camera apparatus installed in a vehicle, comprising:
- a main camera (4) adapted to take photographs of an object in front of the vehicle; and
- a sub-camera (5) adapted to take photographs of the object from a point of view different from a point of view of the main camera (4), the main camera (4) and the sub-camera (5) being disposed with a predetermined spacing in a direction substantially perpendicular to the axis direction of the vehicle;
- wherein the optical axes of the main camera (4) and the sub-camera (5) are inclined by angles (θ1, θ2) toward the main camera (4) side with respect to the axis direction of the vehicle for making a three-dimensional distance distribution substantially left-right symmetric with respect to the axis direction.

2. The apparatus according to claim 1,
wherein the angle (θ1) of inclination of the main camera (4) and the angle (θ2) of inclination of the sub-camera (5) are corresponding to a displacement or distance between a first line on a reference image photographed by the main camera (4)and a second line on the reference image;
wherein the first line is a line for setting a three-dimensional distance distribution generating an area on the reference image substantially symmetrical on left and right sides with respect to the first line in the reference image; and
wherein the second line is a vertical line perpendicular to the optical axis of the main camera (4) in the reference image.

3. The apparatus according to claim 1 or 2,
further comprising a camera stay (3) for mounting the cameras (4, 5) thereon,
wherein the longitudinal direction of the camera stay (3) is substantially perpendicular to the central axis.

4. The apparatus according to any of claims 1 to 3,
wherein each of the cameras (4, 5) is a CCD camera.

5. The apparatus according to any of claims 1 to 4,
wherein the cameras (4, 5) are mounted in the vicinity of a rear-view mirror of a vehicle; and
wherein the cameras (4, 5) are adapted to take photographs of views outside the vehicle.

6. The apparatus according to any of claims 1 to 5,
wherein the stereo camera apparatus (2) is adapted to identify a correlated destination of a first image photograph by the main camera (4) within a second image photograph by the sub-camera (5) and then calculate a parallax of the first image.
